# EUROPÄISCHE PATENTSCHRIFT

(11) **EP 0 817 739 B1**
(45) Veröffentlichungstag und Bekanntmachung des Hinweises auf die Patenterteilung: **30.06.1999**
(21) Anmeldenummer: 96907458.2
(22) Anmeldetag: 14.03.1996
(51) Int. Cl.: B60T 17/02, F04F 5/20

(54) **STRAHLPUMPE**
JET PUMP
POMPE A JET

(30) Priorität: 07.04.1995 DE 19512700
(43) Veröffentlichungstag der Anmeldung: 14.01.1998
(73) Patentinhaber: ITT Automotive Europe GmbH, 60488 Frankfurt (DE)
(72) Erfinder: BAIER, Siegfried, D-51580 Reichshof (DE); WENIG, Peter, D-34519 Diemelsee (DE); NOONE, David, D-34431 Marsberg (DE)
(86) Internationale Anmeldenummer: EP9601078
(87) Internationale Veröffentlichungsnummer: WO9631379

(56) Entgegenhaltungen:
- EP-A- 0 189 709
- DE-A- 4 310 761
- US-A- 4 759 691

## Beschreibung

Die vorliegende Erfindung betrifft eine Strahlpumpe, insbesondere zum Betrieb eines Unterdruckbremskraftverstärkers eines Kraftfahrzeugs nach dem Oberbegriff des Anspruchs 1.

Derartige Strahlpumpen werden bei Bremskraftverstärkersystemen mit einem Unterdruckbremskraftverstärker eingesetzt. Dabei dient diese Strahlpumpe zur Erhöhung des Unterdrucks in dem mit einem Unterdruckerzeuger verbundenen Bremskraftverstärker. Bei bekannten Anlagen dieser Art wird eine Saugstrahlpumpe in eine vom Bremskraftverstärker zu einem Unterdruckerzeuger führende Saugleitung eingesetzt, um bei Bedarf die Saugleistung des Unterdruckerzeugers zu stärken. Hierzu ist der Unterdruckerzeuger ausgangsseitig mit einem seitlich der Strömungsdurchflußrichtung an der Saugstrahlpumpe angeordneten Zuführstutzen verbunden. Durch die Zuführung der unter Druck stehenden Ausgangsluft des Druckerzeugers in die Saugstrahlpumpe wird in dieser die Strömung beschleunigt und ein zusätzlicher Unterdruck erzeugt. Um einen Druckausgleich zwischen dem Unterdruckerzeuger und dem Volumen des Bremskraftverstärkers verhindern, ist zwischen dem Bremskraftverstärker und der Saugstrahlpumpe eine Rückschlagventileinrichtung vorgesehen.

Eine Strahlpumpe, bei der die Rückschlagventileinrichtung in einer baulichen Einheit unmittelbar mit der Saugstrahlpumpe verbunden ist, ist aus der DE- 43 10 761 bekannt. Hierbei ist die Saugstrahlpumpe einstückig mit einem Bypass aus Kunststoff ausgebildet und mit einer mit einem Anschlußstutzen versehenen Ventileinrichtung versehen. Soll die Saugleistung der Saugstrahlpumpe variiert werden, so ist es erforderlich, die gesamte bauliche Einheit neu zu konstruieren.

Aufgabe der vorliegenden Erfindung ist es daher, eine Strahlpumpe vorzuschlagen, die ohne größeren Aufwand an verschiedenen Saugleistungen angepaßt werden kann. Weiterhin soll die Strahlpumpe bei gleichzeitig hoher Funktionalität kostengünstig herstellbar sein.

Gelöst wird diese Aufgabe durch die im kennzeichnenden Teil des Anspruchs 1 angegebene Maßnahme.

Die Verwendung eines Düseneinsatzes in dem der Strömungskanal abnehmenden Querschnitts ausgebildet ist, ermöglicht es, bei ansonsten ungeänderter Saugstrahlpumpe Düseneinsätze verschiedener Saugstrahlkanalquerschnitte einzusetzen, und somit auf kostengünstige Weise eine Vielzahl verschieden leistungsfähiger Strahlpumpen realisieren zu können. Die gleichen Außenabmessungen der Strahlpumpe für verschiedene Leistungstypen vereinfachen die Konstruktion des Einbauraums, in dem die Strahlpumpe zur Anwendung kommen soll, beispielsweise im Motorraum eines Kraftfahrzeugs.

Ist der Düseneinsatz ein separates auswechselbares Bauteil, so ermöglicht dies den Einsatz von kostengünstigen Teilen anstatt teurer, aus hochwertigen Materialien bestehenden Teilen, die für die gesamte Lebensdauer garantiert funktionsfähig sind. Eine Wartung der Strahlpumpe ist möglich. Dabei können einfache Komponenten wie der Düseneinsatz ausgetauscht werden, es ist nicht erforderlich, die komplette Pumpe zu ersetzen.

Hierbei ist es vorteilhaft möglich, den Düseneinsatz und den Saugrohreinsatz als ein aufeinander abgestimmte vormontierte Einheit auszubilden, die in das Gehäuse der Strahlpumpe einsetzbar ist. Es ist aber auch möglich, diese beiden Teile einzeln einzusetzen.

Dabei ist vorgesehen, daß zumindest einer der Einsätze (Saugrohreinsatz und/oder Düseneinsatz) formschlüssig mit dem Kanal, in dem sie eingesetzt ist bzw. sind, verbunden ist. Dies kann vorteilhaft dadurch erreicht werden, daß der entsprechende Einsatz Vorsprünge und/oder Einbuchtungen aufweist, die in entsprechende, am Kanal ausgebildete Einbuchtungen bzw. Vorsprünge eingreifen. Der Einsatz kann somit durch Einrasten bzw. Einklipsen befestigt werden.

Wird der Kanal, in dem der Düseneinsatz angebracht ist, zylindrisch oder einseitig konisch ausgebildet, so weist er keine Engstellen bzw. lediglich eine Engstelle am Ende auf, was es ermöglicht, die Strahlpumpe im Spritzgußverfahren mit einem einzigen einseitig angeordneten Formkern herzustellen, da der Kanal nach der Engstelle nicht wieder aufgeweitet wird, was einen weiteren, von der anderen Seite her angeordneten Formkern erforderlich machen würde.

Erfindungsgemäß ist weiterhin vorgesehen, daß die Ventileinrichtung ein separates Bauteil ist. Dies erleichtert die Montage der Ventile, da diese somit besser zugänglich sind. Weiterhin ist hierdurch auch eine leichte Austauschbarkeit entweder zu Wartungszwecken oder bei Verwendung unterschiedlicher Ventile für unterschiedliche Leistungsanforderungen möglich.

Liegt die Ventileinrichtung einerseits an einem Deckel der Strahlpumpe und anderseits an der Saugstrahlpumpe an, so können sich mechanische Belastungen des Deckels und eines daran befindlichen Anschlusses nicht negativ auf die Ventileinheit auswirken, bei eventuellen Beschädigungen des Dekkels bzw. des Anschlusses muß nicht die gesamte Ventileinheit ausgetauscht werden. Die Ventileinrichtung kann dabei entweder am Kanal oder direkt an dem in den Kanal eingesetzten Saugrohreinsatz anliegen und gegen diesen abgedichtet sein.

Vorzugsweise werden Deckel, Ventileinrichtung und Saugstrahlpumpe mittels einfacher O-Ringe gegeneinander abgedichtet. Diese sind einfach zu handhaben, funktional und kostengünstig. Auf die Verwendung von Klebstoffen, die üblicherweise eingesetzt werden, um Undichtigkeiten zu vermeiden, kann hierdurch verzichtet werden. Bei einer geeigneten Ausgestaltung der Dichtflächen kann auch ganz auf Dichtelemente verzichtet werden.

Weiterhin ist vorgesehen, die Sitzfläche des Rückschlagventils, welches den die Düseneinheit aufnehmenden Kanal abdeckt senkrecht, zur Längsachse des Kanals verlaufen zu lassen, wobei der die Sitzfläche umgebende Kreisring dichtend auf der Stirnfläche des Kanals unmittelbar oder unter Zwischenschaltung eines weiteren Bauteils anliegt. Diese Anordnung der Ebene des Dichtsitzes senkrecht auf der Achse des Kanals ermöglicht eine optimale Dichtwirkung, da die Kraft senkrecht auf die Dichtebene ohne horizontale Komponente einwirkt.

Ist der an dem stromabwärts gelegenen Ende des Gehäuses angeordnete Anschlußstutzen unmittelbar an das Gehäuse angeformt, so hat dies den Vorteil, daß das Gehäuse nur an einer Seite mit einem Deckel versehen werden muß, was eine seitliche Montage ermöglicht.

Die einzelnen Bauteile der Strahlpumpe, insbesondere der Deckel und das Gehäuse, können sowohl formschlüssig, z.B. mittels einer Klipsverbindung, als auch mittels einer Klebeverbindung miteinander verbunden sein.

Bevorzugt wird eine Schweißverbindung, z.B. mittels Reibschweißen, Ultraschallschweißen oder eines anderen, dem Fachmann geläufigen Verfahrens. Schweißverbindungn sind schnell, einfach und sauber ausführbar. Auf zusätzliche Dichtelemente kann verzichtet werden. Außerdem wird dadurch erreicht, daß die Strahlpumpe nicht demontierbar ist. Dies ist für den Fall vorteilhaft, daß eine unerwünschte Manipulation durch den Endverbraucher am fertigen Produkt, welches ein sicherheitsrelevantes Bauteil darstellt, ausgeschlossen werden soll. Dies ist der Fall, wenn die Strahlpumpe in einer Kfz-Bremsanlage zum Einsatz kommt.

Erfindungsgemäß ist ein Metallring zwischen Deckel und Gehäuse vorgesehen, der es ermöglicht, eine Induktionsschweißverbindung herzustellen.

Weitere Vorteile der Erfindung ergeben sich aus der nachfolgenden Beschreibung anhand der Abbildungen. Dabei zeigen:
- Fig. 1: eine Außenansicht einer erfindungsgemäßen Strahlpumpe
- Fig. 2: eine erfindungsgemäße Strahlpumpe im Schnitt entlang der Linie A-A der Fig. 1

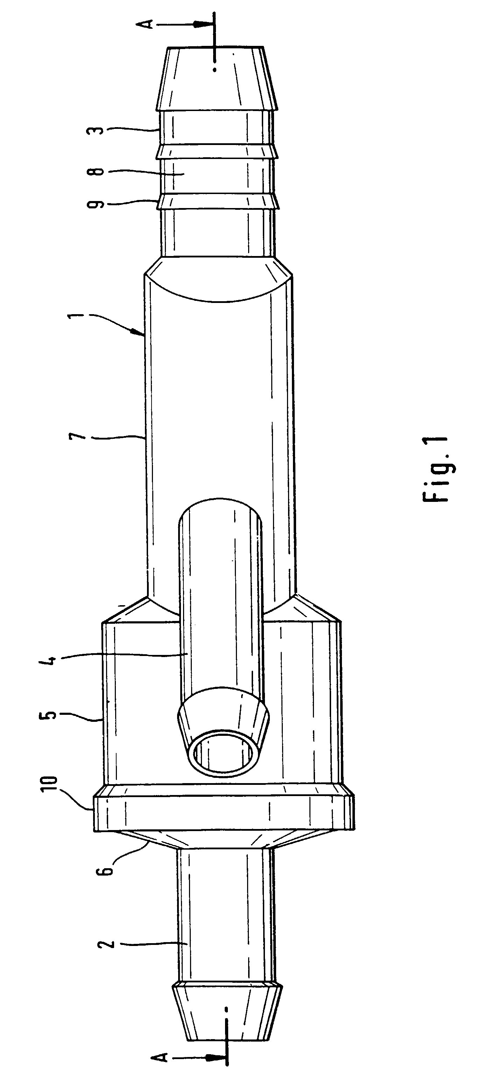

Fig. 1 zeigt eine Außenansicht des Gehäuses 1 der erfindungsgemäßen Strahlpumpe. An den Vakuumanschluß 2 wird die Vakuumkammer eines nicht dargestellten Bremskraftverstärkers angeschlossen, an den Unterdruckanschluß 3 eine Unterdruckquelle. Der Druckanschluß 4 wird an einer Druckquelle angeschlossen. Druckquelle bzw. Unterdruckquelle können dabei stromauf- bzw. stromabwärts der Drosselklappe des Verbrennungsmotors angeordnet sein.

Das Gehäuse 1 besteht aus einem zylindrischen Teil an dem einerseits ein Deckel 6 befestigt ist, an dem der Vakuumanschluß 2 einstückig ausgebildet ist. Der zylindrische Teil geht andererseits in einen bezüglich der Zeichenebene der Fig. 1 verjüngten Abschnitte 7 über. An den Abschnitt 7 ist ein den Unterdruckanschluß 3 bildender Anschlußstutzen 8 einstückig angeformt. Der Anschlußstutzen 8 ist zur sicheren Verbindung mit einem flexiblen Schlauch mit mehreren Widerhaken 9 versehen.

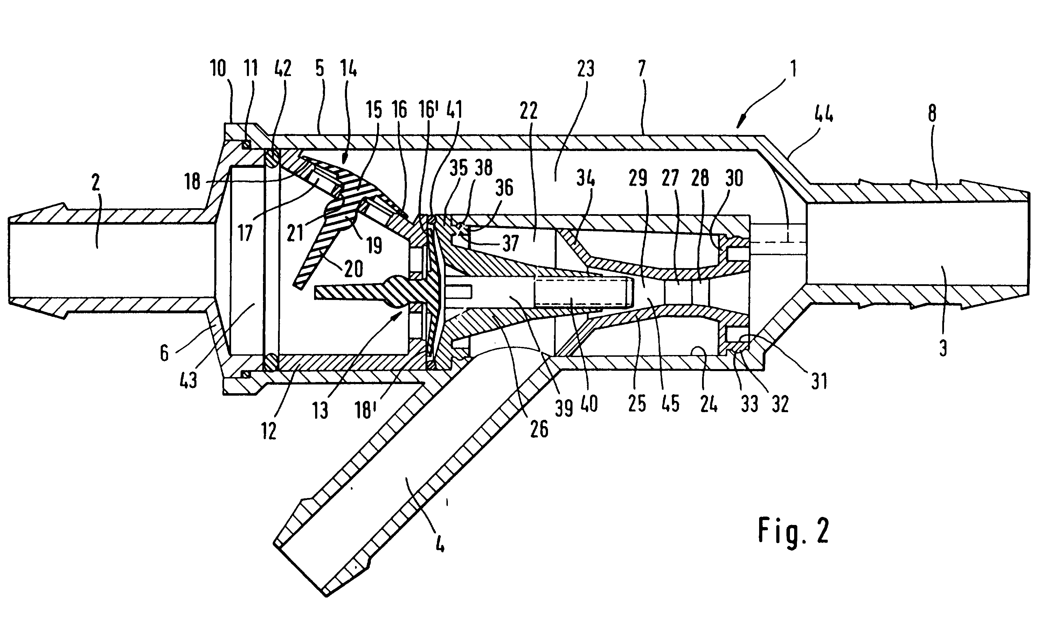

Fig. 2 zeigt die Strahlpumpe der Fig. 1 im Längsschnitt entlang der Linie A-A. Der Deckel 6 ist in einer radialen Erweiterung 10 des Gehäuses 1 eingepreßt. Er kann aber auch eingeklipst oder eingeschraubt sein. Zwischen Erweiterung 10 und Deckel 6 ist ein Metallring 11 angeordnet der ein Verschweißen mittels des Induktionsschweißverfahrens ermöglicht.

Im zylindrischen Teil 5 ist die Ventileinrichtung 12 angeordnet. Sie weist ein erstes Ventil 13 und ein zweites Ventil 14 auf, die jeweils einen Ventilpilz 15 und eine Sitzfläche 16 aufweisen. Die Sitzfläche 16 ist mit mehreren Bohrung 17 versehen, die von einem Kreisring 18 umgeben sind, an dem der Rand des Ventilpilzes 15 dichtend anliegt. Zum Öffnen des Ventils 13 bzw. 14 hebt der äußeres Bereich des Ventilpilzes 15 vom Kreisring 18 ab. Luft kann nun durch die Bohrungen 17 am Ventilpilz 15 vorbei strömen. Der Ventilpilz 15 ist mittels eines mit einer Verbreiterung 19 versehenen Stiels 20 in einer zentralen Bohrung der Sitzfläche befestigt.

Im verjüngten Abschnitt 7 sind die Saugstrahlpumpe 22 sowie die Bypass-Einrichtung 23 ausgebildet. Die Saugstrahlpumpe 22 befindet sich in einem röhrförmigen Kanal 24, die Bypass-Einrichtung 23 weist einen etwa sichelförmigen Querschnitt auf. In den Kanal 24 ist ein Düseneinsatz 25 sowie ein Saugrohreinsatz 26 eingesetzt. Der Düseneinsatz 25 weist einen etwa zylindrischen zentralen Bereich 27 auf, der beidseitig in trichterförmige Erweiterungen übergeht. Die Erweiterung 28 ist mit einem radial vorspringenden Ring 30 versehen, von dem axial verlaufende Zungen 31 vorstehen, die mit Vorsprüngen 32 versehen sind. Die Vorsprünge 32 greifen in Einbuchtungen 33 am inneren Umfang des unterdruckanschlußseitigen Endes des Kanals 24 ein. Der Düseneinsatz 25 kann somit durch Einrasten im Kanal 24 befestigt werden. Die Erweiterung 29 geht in einen trichterförmigen Endbereich 34 über, der an der Innenwand des Kanals 24 anliegt. Der Saugrohranschluß 26 weist einen flachen Endbereich 35 auf, der mit axial vorstehenden Zungen 36 versehen ist, die mittels Vorsprüngen 37 in Einbuchtungen 38 des Kanals 24 eingreifen. Vom Endbereich 35 ausgehend verjüngt sich der Saugrohreinsatz trichterförmig. In seinem Inneren ist eine Bohrung 39 ausgebildet, an deren Ende ein Saugrohr 40 angeordnet ist, welches es bis in die trichterförmige Erweiterung 29 hineinragt.

Im Bereich des Saugrohreinsatzes 26 mündet der Druckanschluß 4 in den Kanal 24. Zwischen dem Endbereich 35 und der Sitzfläche 16' ist ein O-Ring 41 angeordnet, zwischen der Ventileinrichtung 12 und dem Deckel 6 ein O-Ring 42. Die Dichtringe 41, 42 dichten den mit dem Vakuumanschluß 2 verbundenen Unterdruckraum 43 gegenüber der Bypass-Einrichtung 23 sowie den Außenraum ab. Der verjüngte Abschnitt 7 weist einen weiteren Verjüngungsbereich 44 auf, der in den Anschlußstutzen 8 übergeht.

Die erfindungsgemäße Strahlpumpe funktioniert wie folgt: Wenn am Druckanschluß 4 ein höherer Druck als am Unterdruckanschluß 3 herrscht, so strömt Luft vom Druckanschluß 4 am äußeren Bereich des Saugrohreinsatzes 26 vorbei in den Düseneinsatz 25 hinein, durch den in dessen inneren gebildeten Strömungskanal 45 hindurch zum Unterdruckanschluß 3. Dabei wird an dem engen Bereich zwischen Saugrohr 40 und trichterförmige Erweiterung 29 eine hohe Strömungsgeschwindigkeit erreicht, die dazu führt, daß im Saugrohr 40 ein Unterdruck erzeugt wird. Dieser Unterdruck führt dazu, daß das erste Ventil 13 öffnet und der Druck im Unterdruckraum 43 abgebaut wird. Es baut sich dort ein Vakuum auf. Das erste Ventil 13 schließt, sobald dieses Vakuum "besser" ist als dasjenige im Saugrohr 40, wodurch eine Verschlechterung dieses Vakuums vermieden wird.

Herrscht kein Druckunterschied zwischen dem Unterdruckanschluß 3 und dem Druckanschluß 4, bzw. ist dieser Druckunterschied so gering, daß sich keine derart hohe Strömungsgeschwindigkeit einstellen kann, daß ein Unterdruck im Saugrohr 40 erzielt wird, so bleibt das erste Ventil 13 geschlossen. So lange der Druck im Unterdruckraum 43 größer ist als in der Bypass-Einrichtung 21 ist das zweite Ventil 14 geöffnet, andernfalls schließt es. Die Bypass-Einrichtung 23 gewährleistet einen großen Strömungsmittelquerschnitt für den Fall, daß die Saugstrahlpumpe 22 nicht zur Druckminderung im Unterdruckraum 43 beitragen kann.

## Patentansprüche

1. Strahlpumpe mit einer Saugstrahlpumpe (22) bestehend aus einem Strömungskanal (45) abnehmenden Querschnitts und einem darin eingesetzten Saugrohreinsatz (26) einer Bypass-Einrichtung (23) und einer Ventileinrichtung (12), die eine bauliche Einheit bilden, dadurch **gekennzeichnet,** daß die Saugstrahlpumpe (22) einen in einem Kanal (24) eingesetzten Düseneinsatz (25) aufweist, der den Strömungskanal (45) abnehmenden Querschnitts bildet, und daß der Düseneinsatz (25), der Saugrohreinsatz (26) und die Ventileinrichtung (12) als separate, auswechselbare Bauteile ausgebildet sind.

2. Strahlpumpe nach Anspruch 1, dadurch **gekennzeichnet,** daß der Düseneinsatz (25) und der Saugrohreinsatz (26) eine vormontierte Einheit bilden.

3. Strahlpumpe nach Anspruch 1 oder 2, dadurch **gekennzeichnet,** daß zumindest einer der Einsätze (25) bzw. (26) formschlüssig mit dem Kanal (24) verbunden ist.

4. Strahlpumpe nach Anspruch 3, dadurch **gekennzeichnet,** daß der Düseneinsatz (25) bzw. der Saugrohreinsatz (26) Vorsprünge (32, 37) und/oder Einbuchtungen aufweist, die in entsprechende am Kanal (24) ausgebildete Einbuchtungen (33,38) bzw. Vorsprünge eingreifen.

5. Strahlpumpe nach einem der vorhergehenden Ansprüche, dadurch **gekennzeichnet**, daß der Kanal (24) in der der Düseneinsatz (25) eingebracht ist, zylindrisch oder einseitig konisch ausgebildet ist.

6. Strahlpumpe nach Anspruch 1, dadurch **gekennzeichnet,** daß die Ventileinrichtung (12) einerseits an einem Dekkel (6) der Strahlpumpe und andererseits an der Saugstrahlpumpe (22) anliegt.

7. Strahlpumpe nach Anspruch 6, dadurch **gekennzeichnet,** daß Deckel (6), Ventileinrichtung (12) und Saugstrahlpumpe (22) mittels einfacher O-Ringe (40,42) gegeneinander abgedichtet sind.

8. Strahlpumpe nach einem der vorhergehenden Ansprüche, dadurch **gekennzeichnet,** daß die Sitzfläche (16') des ersten Ventils (13) senkrecht zur Längsachse des Kanals (74) verläuft und der die Sitzfläche (16') umgebende Kreisring (18') dichten auf der Stirnfläche des Kanals (24) mittelbar oder unter Zwischenschaltung eines weiteren Bauteils anliegt.

9. Strahlpumpe nach einem der vorhergehenden Ansprüche dadurch **gekennzeichnet,** daß der an dem stromabwärts gelegenen Ende des Gehäuses (1) der Strahlpumpe angeordnete Anchslußstutzen (8) unmittelbar an das Gehäuse (1) angeformt ist.

10. Strahlpumpe nach einem der vorhergehenden Ansprüche, **dadurch gekennzeichnet,** daß der Deckel (6) und das zylindrische Teil (5) miteinander verklebt sind.

11. Strahlpumpe nach einem der vorhergehenden Ansprüche, **dadurch gekennzeichnet,** daß der Deckel (6) und das zylindrisch Teil (5) miteinander verschweißt sind.

12. Strahlpumpe nach Anspruch 11, **dadurch gekennzeichnet,** daß ein Metallring (11) zwischen Deckel (6) und zylindrischem Teil (5) angeordnet ist.

## Claims

1. Jet pump with a sucking jet pump (22) consisting of a flow duct (45) with decreasing cross section and a suction pipe insert (26) inserted therein, a bypass arrangement (23) and a valve arrangement (12), which form a construction unit,
**characterized** in that the sucking jet pump (22) presents a nozzle insert (25) which is inserted in a duct (24), and which forms the flow duct (45) with decreasing cross section, and in that the nozzle insert (25), the suction pipe insert (26) and the valve arrangement (12) are configured as separate, exchangeable components.

2. Jet pump as claimed in Claim 1,
**characterized** in that the nozzle insert (25) and the suction pipe insert (26) form a preassembled unit.

3. Jet pump as claimed in claim 1 or claim 2,
**characterized** in that at least one of the inserts (25 or 26) is positively connected to the duct (24).

4. Jet pump as claimed in Claim 3,
**characterized** in that the nozzle insert (25) or the suction pipe insert (26) presents projections (32,37) and/or recesses which engage corresponding recesses (33,38) or projections formed in the duct (24).

5. Jet pump as claimed in any one of the preceding claims,
**characterized** in that the duct (24), into which the nozzle insert (25) is inserted, has a cylindrical shape or, on one side, a conical shape.

6. Jet pump as claimed in claim 1,
**characterized** in that the valve arrangement (12) is applied, on one side, against a cover (6) of the jet pump and, on the other side, against the sucking jet pump (22).

7. Jet pump as claimed in Claim 6,
**characterized** in that the cover (6), the valve arrangement (12) and the sucking jet pump (22) are mutually sealed by means of simple O-rings (40,42).

8. Jet pump as claimed in any one of the preceding claims,
**characterized** in that the seat surface (16') of the first valve (13) is perpendicular with respect to the longitudinal axis of the duct (24), and the circular ring (18') which surrounds the seat surface (16') is applied so that it forms a seal against the frontal surface of the duct (24), directly or with insertion of an additional component.

9. Jet pump as claimed in any one of the preceding claims,
**characterized** in that the feed connection piece (8), which is arranged at the downstream end of the housing (1) of the jet pump, is molded directly at the housing (1).

10. Jet pump as claimed in any one of the preceding claims,
**characterized** in that the cover (6) and the cylindrical part (5) are cemented to each other.

11. Jet pump as claimed in any one of the preceding claims,
**characterized** in that the cover (6) and the cylindrical part (5) are welded to each other.

12. Jet pump as claimed in Claim 11,
**characterized** in that a metal ring (11) is arranged between the cover (6) and the cylindrical part (5).

## Revendications

1. Ejecteur comprenant un éjecteur à aspiration (22) composé d'un canal d'écoulement (45) à section décroissante et d'un insert de tube d'aspiration (26) inséré dans ce canal, d'un dispositif de bipasse (23) et d'un dispositif de clapets (12), qui forment une unité monobloc, caractérisé en ce que l'éjecteur à aspiration (22) présente un insert de tuyère (25) inséré dans un canal (24) et qui forme le canal d'écoulement (45) à section décroissante, et en ce que l'insert de tuyère (25), l'insert de tube d'aspiration (26) et le dispositif de clapets (12) sont réalisés sous la forme d'éléments séparés, interchangeables.

2. Ejecteur selon la revendication 1, caractérisé en ce que l'insert de tuyère (25) et l'insert de tube d'aspiration (26) forment une unité préalablement montée.

3. Ejecteur selon la revendication 1 ou 2, caractérisé en ce qu'au moins un des inserts (25) ou (26) est relié au canal (24) par un assemblage opérant par assemblage de forme.

4. Ejecteur selon la revendication 3, caractérisé en ce que l'insert de tuyère (25) et l'insert de tube d'aspiration (26) présentent des protubérances (32, 37), ou des évidements, qui se verrouillent avec des évidements (33, 38), ou des protubérances, formés sur le canal (24) de façon correspondante.

5. Ejecteur selon une des revendications précédentes, caractérisé en ce que le canal (24) dans lequel est agencé l'insert de tuyère (25) est de configuration cylindrique ou conique à une pente.

6. Ejecteur selon la revendication 1, caractérisé en ce que le dispositif de clapets (12) est en appui, d'un côté, contre un couvercle (6) de l'éjecteur et, de l'autre côté, contre l'éjecteur à aspiration (22).

7. Ejecteur selon la revendication 6, caractérisé en ce que le couvercle (6), le dispositif de clapets (12) et l'éjecteur à aspiration (22) sont isolés hermétiquement les uns des autres au moyen de simples bagues toriques (40, 42).

8. Ejecteur selon une des revendications précédentes, caractérisé en ce que la surface de siège (16') du premier clapet (13) s'étend perpendiculairement à l'axe longitudinal du canal (24) et la couronne de cercle (18') qui entoure la surface de siège (16') est appuyée à joint étanche sur la surface frontale du canal (24), soit directement, soit avec interposition d'un autre élément.

9. Ejecteur selon une des revendications précédentes, caractérisé en ce que la tubulure de raccordement (8) disposée à l'extrémité aval du boîtier (1) de l'éjecteur est formée directement sur le boîtier (1).

10. Ejecteur selon une des revendications précédentes, caractérisé en ce que le couvercle (6) et la partie cylindrique (16) sont collés l'un à l'autre.

11. Ejecteur selon une des revendications précédentes, caractérisé en ce que le couvercle (6) et la partie cylindrique (5) sont soudés l'un à l'autre.

12. Ejecteur selon la revendication 11, caractérisé en ce qu'une bague métallique (11) est disposée entre le couvercle (6) et la partie cylindrique (5).
